Europäisches Patentamt

European Patent Office

Office européen des brevets

(19)

(11) Veröffentlichungsnummer: **0 005 886**
**B1**

# (12) EUROPÄISCHE PATENTSCHRIFT

(45) Veröffentlichungstag der Patentschrift:
25.05.83

(21) Anmeldenummer: **79200265.1**

(22) Anmeldetag: **31.05.79**

(51) Int. Cl.³: **B 01 J 4/00,** B 28 C 5/40,
G 01 G 13/08

(54) Verfahren und Vorrichtung zum Dosieren von pulverförmigem Material.

(30) Priorität: **01.06.78 NL 7805961**

(43) Veröffentlichungstag der Anmeldung:
**12.12.79 Patentblatt 79/25**

(45) Bekanntmachung des Hinweises auf die Patenterteilung:
**25.05.83 Patentblatt 83/21**

(84) Benannte Vertragsstaaten:
**DE NL SE**

(56) Entgegenhaltungen:
**BE-A-520 598**
**DE-A-2 147 722**
**DE-A-2 610 582**
**US-A-2 792 030**

(73) Patentinhaber: **Buys, Petrus Martinus, Ijssel de Schepperstraat 3, NL-3981 EZ Bunnik (NL)**

(72) Erfinder: **Buys, Petrus Martinus, Ijssel de Schepperstraat 3, NL-3981 EZ Bunnik (NL)**

(74) Vertreter: **Rhijnsburger, Johan Gerard, 's-Gravenbroekseweg 32, NL-2811 GE Reeuwijk (NL)**

## Verfahren und Vorrichtung zum Dosieren von pulverförmigem Material

Die Erfindung betrifft ein Verfahren zum Dosieren von pulverförmigem Material, das mittels einer geneigt angeordneten länglichen Einrichtung, welche durch einen Schwingantrieb angetrieben wird, einem auf einer Wiegevorrichtung angeordneten Auffangbehälter zugeführt wird, wobei bei Erreichen eines bestimmten Gewichts der Dosiervorgang seitens der Wiegevorrichtung beendet und das im Auffangbehälter befindliche pulverförmige Material anderen Materialien zum Zwecke des Mischens mit diesen zugeführt wird sowie eine Vorrichtung zur Durchführung dieses Verfahrens.

Ein derartiges Verfahren ist aus der DE-A-2 610 582 bekannt, wobei aber hauptsächlich feuerfeste Massen und Gipse für Dentalzwecke dosiert werden. Zur genauen Dosierung und Verhinderung des Zusammenballens des Pulvers ist zwischen dem vertikalen Vorratsbehälter oder Bunker und dem Auffangbehälter auf der Waage eine geneigte Schüttelrutsche angeordnet, deren Antrieb von den der Waage zugeordneten Steuermitteln gesteuert wird. Sobald das gewünschte Gewicht erreicht ist, wird der Antrieb stillgesetzt. Diese Vorrichtung ist zum Dosieren und Mischen von Materialien wie Pigmente, die bekanntlich adhäsive Eigenschaften haben und zum Beispiel für Betonmischungen Verwendung finden, nicht geeignet, da infolge eines Festbackens der Pigmentteilchen an den Wänden des Bunkers Schwierigkeiten durch Brückenbildung in dem Bunker entstehen. Ebenso ist eine gute Fließbarkeit in der Schüttelrutsche nicht gewährleistet.

In der belgischen Patentschrift 520 598 wird ganz allgemein vorgeschalgen, Fördermittel, wie Transportbänder oder Schüttelrutschen mit Kunststoffen auszukleiden, um dadurch die Reibungskräfte, die bei klebrigen Materialien erheblich sein können, herabzusetzen. Man kann dadurch kleinere Neigungswinkel erreichen, als sie sonst notwendig sind. Diese allgemeine Lehre gibt ebensowenig eine Lösung der Probleme beim Dosieren von Pigmenten. Die Kunststoffauskleidung eines Fördermittels reicht an sich nicht aus, wenn man nicht zusätzlich die Einrichtung als Ganzes anpaßt.

Die Erfindung bezweckt, die beim Dosieren von Pigmenten auftretenden Probleme zu beheben. Diese Probleme entstehen dadurch, daß die kommerziell nur in beschränktem Maße zur Verfügung stehenden Pigmente schwierig hantierbare, klebrige Pulver sind, die leicht an der Vorrichtung festbacken, Brücken bilden, bei Lagerung in Ecken sich festsetzen, in Löcher eindringen und deshalb nicht derart genau zu dosieren sind, daß reproduzierbare Farben hergestellt werden können. Außerdem sind Pigmente relativ teuer, so daß Verluste an Pigmente und die Notwendigkeit die Apparatur mehrfach zu reinigen zu erheblichen Kosten führen, während es des weiteren erwünscht ist, einen Kontakt mit den Pigmenten aus hygienischen Gründen möglichst weitgehend zu vermeiden.

Diese Probleme werden durch das eingangs genannte Verfahren erfindungsgemäß dadurch gelöst, daß als pulverförmiges Material ein oder mehrere Pigmente direkt der als Bunker ausgebildeten, geneigt angeordneten länglichen Einrichtung aufgegeben und aus diesem Bunker mittels des Schwingantriebs durch ein oder mehrere, am unteren Ende des Bunkers befindlichen Auslaßöffnungen dem Auffangbehälter zugeführt werden, wobei der Bunker keine scharfen Ecken im Inneren aufweist und er wie auch der Auffangbehälter aus einem harten Kunststoff hergestellt bzw. mit einem solchen ausgekleidet sind, um ein Anhaften von Materialteilchen am Bunker und Auffangbehälter zu vermeiden, und daß bei Erreichen des bestimmten Gewichts ein Signal seitens der Wiegevorrichtung ausgelöst wird, das die Auslaßöffnung bzw. Auslaßöffnungen schließt und den Auffangbehälter mittels einer elektropneumatisch betätigten Vorrichtung entleert.

Die Vorrichtung zur Durchführung des Verfahrens ist erfindungsgemäß dadurch gekennzeichnet, daß die geneigt angeordnete längliche Einrichtung ein Bunker ist, der an seinem unteren Ende mit einer oder mehreren Auslaßöffnungen versehen ist, wobei der Bunker und der auf der Wiegevorrichtung angeordnete Auffangbehälter aus einem harten Kunststoff hergestellt bzw. damit ausgekleidet sind, und daß Steuermittel vorhanden sind, die die Auslaßöffnung bzw. Auslaßöffnungen des Bunker nach Erreichen eines bestimmten Gewichts schließen und den Auffangbehälter zum Zwecke des Entleerens kippen.

Die Erfindung ermöglicht eine solche genaue Dosierung, daß man immer wieder die gewünschte gleiche Farbe als Endprodukt erhält. Dieses Verfahren erlaubt eine Dosierung von einigen Dutzenden Kilogrammen an Pigmenten mit einer Abweichung von weniger als 5 g, so daß man zum Beispiel selber reproduzierbare Mischfarben herstellen kann. Das hat den weiteren Vorteil, daß man keine Pigmente vorzumischen braucht, denn man kann die Basispigmente in die Kammern des Bunkers einfüllen und mit der Dosierung anfangen. Wegen der günstigen Dosierung ist es auch möglich, die Vorrichtung der Erfindung in einem automatischen Betonmischer aufzunehmen und somit reproduzierbare gefärbte Betonmischungen herzustellen, was bisher nicht möglich war.

Handelsübliche Pigmente sind unter anderem Manganschwarz oder Braunstein, Ultramarinblau stabilisiert mit Kieselsäure, Chromoxydgrün, Ocker oder synthetisches Gelb, Rotpigment, das fast ausschließlich Ferroferrioxyd sowohl natürlicher als auch synthetischer Art sein kann. Vor allem dieses letzte Pigment gibt bei Lagerung und Dosierung Schwierigkeiten durch Brückenbildung und Kleben an Metallwänden.

Der Winkel des Bunkers mit der Waagerechten soll im allgemeinen in einem Bereich von 5—30°, vorzugsweise 15—25°, liegen. Der Neigungswinkel soll derart sein, daß das Material bei Vibration unter dem Schwerkrafteinfluß nach unten bewegt wird; der Winkel darf aber nicht so groß sein, daß eine Brückenbildung entsteht. Der Bunker ist vorzugsweise versehen mit einem Schneckenrad oder einer Drahtspindel an der Hinterseite, wodurch der Neigungswinkel des Bunkers je nach Wunsch eingestellt werden kann. Für Ockergelbpigmente kann man z. B. den Neigungswinkel größer wählen als für Rotpigmente. Meistens aber wird der Winkel für alle Beton- und Steinpigmente auf einen festen Wert eingestellt.

Der Bunker kann mittels einer Scheidewand in zwei Teile unterteilt werden, wenn man zwei Pigmente zu dosieren wünscht zwecks einer Mischfarbe. Die beiden Bunkerteile werden mit den Pigmenten gefüllt; es wird immer nur ein Pigment dosiert. Mit Hilfe einer Elektroniksteuerung wird das Ende der Dosierung des ersten Pigmentes registriert, wonach der Auslaßschieber der ersten Kammer geschlossen und der Auslaßschieber der zweiten Kammer geöffnet wird. Es kann dann mit der Dosierung des zweiten Pigments angefangen werden. Der Bunker kann auch auf andere Weise in zwei (oder mehr) Teile unterteilt oder aus zwei (oder mehr) Teilen aufgebaut werden, wie z. B. aus nebeneinander aufgestellten und miteinander verbundenen Zylindern oder aus einem doppelten U, wobei sich zwei getrennte Öffnungen ergeben. Wichtig ist, daß scharfe Winkel, in denen eine Pigmentadhäsion und Stauung stattfinden könnte, vermieden werden. Dies läßt sich vermeiden, indem man eventuelle scharfe Winkel oder andere nicht glatt verlaufende Stellen mit Kitt oder einem anderen klebenden Kunststoffmaterial, das zugleich Füllstoff ist, auskleidet. Dies ist z. B. der Fall, wenn eine Scheidewand verwendet wird. Falls der Bunker aus einem Zylinder besteht, ist er oben durch einen entsprechenden Deckel verschlossen.

Der Schwingantrieb kann jeder bekannte Motortypus sein. Er wird je nach Größe und Form des Bunkers gewählt. Die Vibrationsfrequenz bei der Vorrichtung der Erfindung kann variieren von 1000 bis 2000 Schwingungen pro Sekunde, wobei ein Wert von etwa 1500 sich als günstig erwiesen hat. Dabei ist der Bunker befestigt und mit Schwingungsdämpfern versehen, derart, daß die Schwingungen nicht auf andere Teile der Einrichtung übertragen werden. Der Motor ist geerdet.

Der Bunker und der Auffangbehälter der Wiegevorrichtung sind aus einem mechanisch festen Kunststoff angefertigt oder an der Kontaktoberfläche mit einer Kunststoffschicht versehen, die eine niedrige Adhäsion hinsichtlich der Pigmente hat. Hartes PVC oder Polystyren sind sehr geeignet für den Bunker. Diese bekannten Stoffe können mit Verstärkungseinlagen, z. B. Glasfasern, versehen sein. Ein derartiger Bunker kann leicht bearbeitet werden und zeigt nicht die Metallmüdigkeit, die bei Metallen durch die Vibrationen des Schwingantriebes entstehen können.

Im Falle der Auskleidung mit Kunststoff braucht der Kunststoff nicht die mechanische Festigkeit zu besitzen, wie sie der Kunststoff haben muß, aus dem der ganze Bunker und der ganze Auffangbehälter hergestellt werden können. Es ist notwendig, daß die Auskleidung gut an dem Material, wie Metall, haftet und keine oder fast keine Adhäsion mit dem Pulver hat sowie verschleißfest ist. Die in der Technik üblichen Auskleidungsmethoden für Kunststoff auf Metall oder andere Materialien können zu diesem Zweck angewendet werden.

Der Auffangbehälter der Wiegevorrichtung kann vorteilhafterweise ausgekleidet werden mit einer Kunststoffschicht, z. B Teflon oder mit einer Schrumpffolie, die durch Erhitzen aufgetragen wird. Der Bunker kann ebenfalls mit einer Kunststoffschicht ausgekleidet werden. Aber es ist besser, den Bunker als ganzes aus Kunststoff mit der notwendigen mechanischen Festigkeit anzufertigen, damit das Gewicht des Bunkers nicht zu groß wird.

Andere Kunststoffe als die obenerwähnten, insofern sie die mechanische Festigkeit und geringe Adhäsion hinsichtlich der Pigmente aufweisen, sind ebenfalls brauchbar. Es darf jedoch zu keinen Ermüdungserscheinungen infolge der andauernden Schwingungen kommen. Beispiele hierfür sind die Polyalkene, Polyester, Fluorwasserstoffpolymere und andere Stoffe, die diese Anforderungen erfüllen. Unter keinen Bedingungen darf der Bunker oder der Auffangbehälter aus Metall angefertigt sein oder dürften die Kontaktoberflächen ganz oder nur zum Teil aus Metall bestehen oder sonstige scharfe Winkel aufweisen, die nicht wie oben beschrieben, behandelt wurden. Durch die schon erwähnten Erscheinungen von Brückenbildung und Adhäsion an den Innenwänden des Bunkers und des Auffangbehälters würde die erwünschte Genauigkeit der Dosierung vollkommen verloren gehen. Hiermit zusammenhängend sollte man beim Herstellen von gefärbten Betonmischungen ebenfalls das Pigment erst nach den anderen Komponenten dosieren; das Pigment soll nicht in Berührung mit Metallteilen eines Transportbandes oder eines Elevators kommen.

Es ist vorteilhaft eventuell zusätzliche Maßnahmen zu treffen, die in manchen Fällen die Adhäsion weiter herabsetzen, wie die Anwendung von glatt abgearbeiteten Oberflächen an den Kunststoffunterteilen oder die Anwendung von Hilfsmitteln, um die Adhäsion weiter zu verringern, wie z. B. eine Behandlung mit den sogenannten »non-adhesives«. Wenn nötig, können in den Kunststoff selber derartige an sich bekannte Mittel aufgenommen werden, wie auch antistatische Mittel zwecks Vorbeugung gegen Kleben durch statische Elektrizität. In bestimmten Typen von Kunststoffen werden derartige Mittel, zusammen mit anderen üblichen Zusätzen, hinzugefügt.

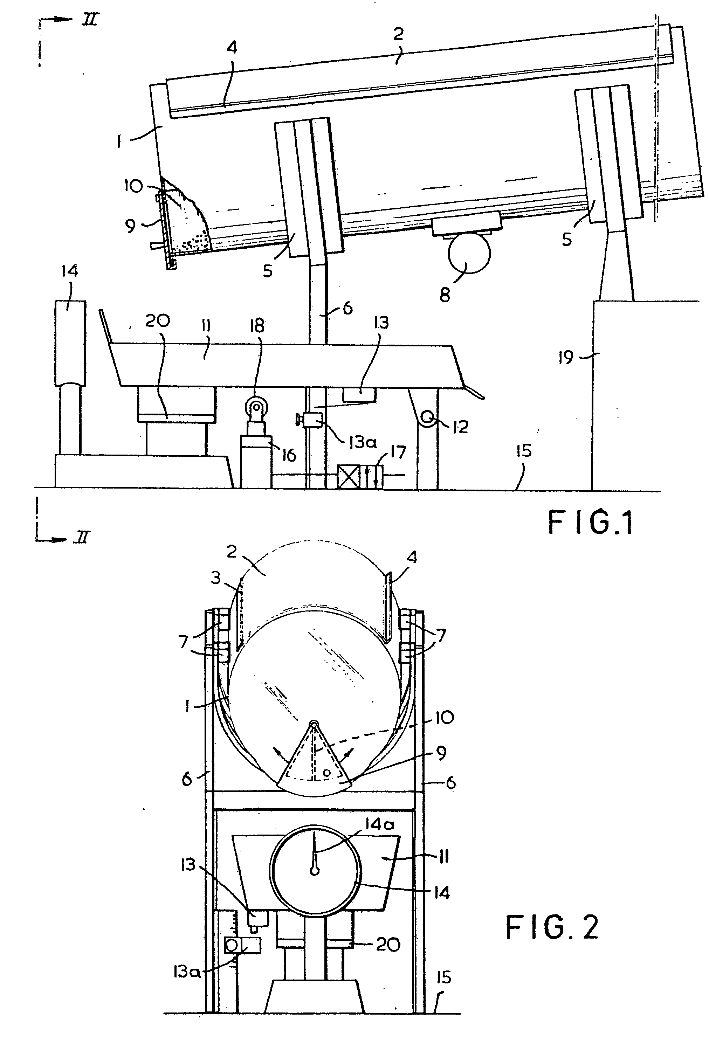

Die Erfindung wird jetzt anhand der Zeichnung erläutert. F i g. 1 gibt eine Seitenansicht und Fig. 2 eine Voderansicht der Vorrichtung wieder. In Fig. 1 ist der Bunker 1 ein hohler Zylinder, der an der Oberseite mit einem Scharnierdeckel 2 mit Scharnier 3 und Handgriff 4 versehen ist. Der Zylinder wird gehalten von Befestigungsplatten 5, die mittels Schwingungsdämpfern 7 an Stützen 6 einer Stützkonstruktion befestigt sind. Der Neigungswinkel beträgt ca. 15°. An dem Zylinder ist ein Schwingungsmotor 8 befestigt, der den Zylinder in Schwingung versetzt und sich vorzugsweise ungefähr in der Mitte des Zylinders befindet. Die Befestigungsplatten 5 sind mit Bolzen angebracht. In Fig. 2 ist der Auslaufschieber 9 sichtbar. Dieser dreieckige segmentförmige Auslaufschieber 9 ist durch eine in den Zylinder reichende Verteilplatte 10 in zwei Teile unterteilt. Der Zylinder stützt sich an seinem hinteren Ende auf einem Stützelement 19 ab. In Fig. 1 ist am vorderen Ende des Zylinders ein kleinerer Teil vom Zylindermantel deutlichkeitshalber weggenommen, damit man das Pigment in der ersten Kammer und die Verteilwand 10 sehen kann. In den Figuren wird zugleich die Wiegevorrichtung 20 gezeigt. In dem Auffangbehälter 11 wird das dosierte Pigment aufgefangen. Wie aus der Fig. 1 hervorgeht, kann der Auffangbehälter um das Gelenk 12, z. B. einem Kugellager schwenken, wobei nach Voreinstellung der erforderlichen Gewichtsmengen, z. B. mittels eines Reed-Kontaktes, beobachtet werden kann, wann die Gleichgewichtslage erreicht wird. Durch den Reed-Kontakt wird dann ein Signal ausgelöst, wodurch der Dosiervorgang gestoppt wird. Mittels eines Schalters 13, der mit einem verstellbaren Anschlag 13a zusammenarbeitet, kann zugleich signaliert werden, daß sowohl der Dosiervorgang als auch das Leeren des Auffangbehälters stattgefunden haben.

Wenn zwei oder mehr Pigmente dosiert werden, ist zu empfehlen, eine Wiegeuhr 14 mit Zeiger 14a vorzusehen, wodurch das Wiegen verfolgt werden kann. Die Wiegeplatte 20 wird abgestützt durch eine Platte 15. Das dosierte Pigment wird abgeführt, indem man den Auffangbehälter 11 mittels eines Luftzylinders 16 anhebt, der durch ein 2/5 Magnetventil 17 gesteuert wird.

Weil der Auffangbehälter nicht als Vorratsgefäß für größere Mengen Pigment vorgesehen ist und die Chargen nach kürzerer Zeit abgeführt werden, ist der Neigungswinkel hier nicht so kritisch wie für den Bunker. So kann hierbei auch der Neigungswinkel variieren von z. B. 50 bis 80°, abhängig von der jeweiligen Gegebenheit. An der Oberseite des Kolbens des Luftzylinders 16 wird vorzugsweise ein Kunststoffknopf 18 angebracht, um eventuellen Beschädigungen des Auffangbehälters 11 vorzubeugen.

Die Arbeitsweise der Vorrichung ist folgend: Der Bunker wird mit Pigmenten gefüllt. Die Dosierung kann entweder mit der Hand oder völlig automatisch inganggesetzt werden. Im ersten Falle wird der Startknopf gedrückt und die aufeinanderfolgenden Handlungen zugleich eingeleitet, indem die entsprechenden elektrischen Kontakte eingeschaltet werden. Bei der vollautomatischen Steuerung, bei der in dem Speicher des Automaten die verschiedenen Abläufe gespeichert sind, braucht nur der Startknopf eingeschaltet zu werden. Wenn nur ein Pigment dosiert wird, wird immer eine vorbestimmte Menge dosiert. Nachdem ein Signal ergangen ist, wird die Dosierung gestoppt (z. B. mit einem Reed-Kontakt) und der Auffangbehälter geleert. Mit Hilfe eines Endschalters wird festgestellt, daß die Dosierung und die Entleerung des Pigments stattgefunden haben, wobei nach einer vorbestimmten Zeitperiode, abhängig von der Anlage, z. B. 2 Sekunden, der Zyklus wieder von vorne anfangen kann. Wenn man eine Wiegeuhr verwendet, kann ein Prezisionsfolgepotentiometer eingeschaltet werden, der dem Zeiger mit Hilfe eines Mitnehmers folgt und als Monitor arbeitet, d. h. den Ist-Wert signalisiert.

Wenn in der Vorrichtung nach den Fig. 1 und 2 zwei Pigmente dosiert werden, geht dies im Falle der automatischen Steuerung folgendermaßen vor sich: In dem Speicher des Automaten ist die erwünschte Mischfarbe festgelegt. Zu einer bestimmten Mischfarbe gehört z. B. eine Mischung von 2,8 kg schwarzer und 1,2 kg roter Farbe. Die Vorrichtung fängt nach dem Wählen der Mischfarbe und dem Geben des Startsignals an, 2,8 kg schwarze Farbe zu dosieren. Nach dem Erreichen des richtigen Gewichts, das durch den Präzisionspotentiometer gemessen wird, und nachdem gegebenenfalls in der letzten Phase der Dosierung die Auslaßöffnung zum Teil verschlossen oder durch einen eingeschalteten »Flip-Flop« die Auslaufschieber Oszillationen unterworfen worden sind, um die Dosierungsgenauigkeit zu vergrößern, wird signaliert, daß der Auslaufschieber der Kammer mit der schwarzen Farbe geschlossen wird. Weiter wird durch das Programm des Speichers des Automaten ein Signal abgegeben, daß die Rotpigmentdosierung anfangen kann. Dieser Vorgang ist genau dem des schwarzen Pigments entsprechend.

Nach dem Schließen der Auslaufschieber, wird ein Signal abgegeben, mit dem der Luftzylinder durch das Magnetventil betätigt wird. Der Auffangbehälter wird gehoben und geleert und wieder in die alte Lage zurückgebracht. Wenn ein automatischer Betonmischer verwendet wird, wird das Pigment auf das Transportband oder in den Elevator entleert, wobei sich darauf wenigstens zumindest eine der übrigen Komponente befindet, damit eine direkte Berührung des Pigments mit dem Transportband oder mit den Behältern des Elevators vermieden wird. Der Luftzylinder wird durch das Magnetventil in seine ursprüngliche Lage zurückgeführt, wodurch verhütet wird, daß der Kolben eventuell ein nachfolgendes Wiegen verhindert. Beim Gebrauch einer Wiegeuhr, die für die automatische Arbeit notwendig ist, werden die Gewichte kumulativ auf der Skala abgelesen und der eingeschaltete Präzisionspotentiometer betätigt die Auslaufschieber der einzelnen Kammern. Eventuell kann ein Register eingeschaltet werden, das die dosierten Mengen zählt und registriert. Diese Vorgänge können über längere Zeiträume wiederholt werden, ohne daß die Pigmente an den Wänden des Bunkers und des Auffangbehälters kleben, so daß keine Brückenbildung auftreten und eine genaue Dosierung erfolgen kann. So erhält man immer die gleichen Farben.

Ein zusätzlicher Vorteil der »Zweipigmentenmethode« ist, daß man auch nach längerer Zeit imstande ist, genau die gleiche Mischfarbe zu bekommen. Die Einrichtung kann als solche angewendet werden für das Abwiegen von bestimmten Pigmenten, bei denen die Wiegevorrichtung mit einer Handbewegung auf die genau zu dosierenden Gewichtsmengen eingestellt wird, wonach die Dosierung ausgeführt werden kann und so oft wie notwendig wiederholt werden kann.

Die Vorrichtung kann auch angeschlossen und völlig integriert werden in einen vollautomatischen Beton- oder Steinmischer.

Das Arbeitsprinzip bleibt das gleiche, nur die Steuerung der Pigmentdosiervorrichtung wird in das Steuerungsschema des Mischers aufgenommen, wobei auch die verschiedenen Mischfarben in dem Speicher des Automaten festgelegt werden.

Das Verfahren wird besonders derart ausgeführt, daß das Pigment beim Abführen aus dem Auffangbehälter nicht mit Metallteilen eines Förderbandes oder eines Elevators in Berührung kommt. Es ist von Vorzug, die Pigmentdosierung, wenn diese in einen vollautomatischen Betonmischer oder Steinmischer integriert ist, als letzte Stufe der Mischung auszuführen und danach die fertige Mischung zu transportieren und zu Beton oder Stein zu verarbeiten. Das Verfahren ist besonders geeignet für das Dosieren von zwei oder mehr Pigmenten, wobei die Pigmente hintereinander aus getrennten Kammern des Bunkers, die die genannten Bedingungen erfüllen, abgeführt und kumulativ in dem Auffangbehälter dosiert werden. Mittels einer Wiegeuhr und eines mit deren Zeiger gekuppelten Präzisionsfolgepotentiometers werden Signale erzeugt, die nach dem Erreichen des erwünschten Dosiergewichtes des ersten Pigments den Auslaufschieber der entsprechenden Kammer des Bunkers schließen und den Auslaufschieber der zweiten Kammer des Bunkers öffnen, so daß mit der Dosierung des zweiten Pigments begonnen werden kann.

**Patentansprüche**

1. Verfahren zum Dosieren von pulverförmigem Material, das mittels einer geneigt angeordneten länglichen Einrichtung (1), welche durch einen Schwingantrieb (8) angetrieben wird, einem auf einer Wiegevorrichtung (20) angeordneten Auffangbehälter (11) zugeführt wird, wobei bei Erreichen eines bestimmten Gewichts der Dosiervorgang seitens der Wiegevorrichtung beendet und das im Auffangbehälter befindliche pulverförmige Material anderen Materialien zum Zwecke des Mischens mit diesen zugeführt wird, dadurch gekennzeichnet,

— daß als pulverförmiges Material ein oder mehrere Pigmente direkt der als Bunker (1) ausgebildeten, geneigt angeordneten länglichen Einrichtung aufgegeben und aus diesem Bunker mittels des Schwingantriebs (8) durch ein oder mehrere, am unteren Ende des Bunkers befindlichen Auslaßöffnungen (9) dem Auffangbehälter (11) zugeführt werden, wobei der Bunker keine scharfen Ecken im Inneren aufweist und er wie auch der Auffangbehälter aus einem harten Kunststoff hergestellt bzw. mit einem solchen ausgekleidet sind, um ein Anhaften von Materialteilchen am Bunker und Auffangbehälter zu vermeiden, und

— daß bei Erreichen des bestimmten Gewichts ein Signal seitens der Wiegevorrichtung (20) ausgelöst wird, das die Auslaßöffnung bzw. Auslaßöffnungen (9) schließt und den Auffangbehälter (11) mittels einer elektropneumatisch betätigten Vorrichtung (16, 17) entleert.

2. Verfahren nach Anspruch 1, dadurch gekennzeichnet, daß zwei oder mehrere Pigmente hintereinander aus dem Bunker (1), der aus voneinander getrennten Teilen besteht, dem Auffangbehälter (11) zugeführt werden.

3. Verfahren nach Anspruch 1 oder 2, dadurch gekennzeichnet, daß das Entleeren des Auffangbehälters (11) derart erfolgt, daß das oder die Pigmente mit Metallteilen oder sonstigen Teilen der Vorrichtung, die sich dem Auffangbehälter anschließt, nicht in Berührung kommen.

4. Vorrichtung zur Durchführung des Verfahrens nach den Ansprüchen 1 bis 3, dadurch gekennzeichnet,

— daß die geneigt angeordnete längliche Einrichtung ein Bunker (1) ist, der an seinem unteren Ende mit einer oder mehreren Auslaßöffnungen (9) versehen ist, wobei der Bunker und der auf der Wiegevorrichtung (20) angeordnete Auffangbehälter (11) aus einem harten Kunststoff hergestellt bzw. damit ausgekleidet sind, und

— daß Steuermittel (13, 13a, 17) vorhanden sind, die die Auslaßöffnung bzw. Auslaßöffnungen (9) des Bunkers (1) nach Erreichen eines bestimmten Gewichts schließen und den Auffangbehälter (11) zum Zwecke des Entleerens kippen.

5. Vorrichtung nach Anspruch 4, dadurch gekennzeichnet, daß der Bunker (1) aus zwei voneinander getrennten Teilen besteht, von denen jeder eine Auslaßöffnung (9) mit einstellbarem Querschnitt aufweist.

6. Vorrichtung nach den Ansprüchen 4 und 5, dadurch gekennzeichnet, daß der Bunker aus einem Zylinder (1) besteht, der oben durch einen entsprechenden Deckel (2) verschlossen ist.

7. Vorrichtung nach den Ansprüchen 4 bis 6, dadurch gekennzeichnet, daß der Bunker (1) aus einem harten PVC oder Polystyren besteht.

8. Vollautomatischer Mischer zum Herstellen von Beton- und Steinmischungen, dadurch gekennzeichnet, daß die Vorrichtung gemäß den Ansprüchen 4 bis 7 in die Steuerungskette dieses vollautomatischen Mischers derart integriert ist, daß das Mischen des oder der Pigmente mit den anderen Materialien erst dann erfolgt, wenn zumindestens eines dieser Materialien sich bereits auf einem Förderband des vollautomatischen Mischers oder in dem Auffangbehälter (11) befindet.

## Claims

1. Process for dosing pulverulent material, which is fed to a collecting container (11) placed on a weighing apparatus (20) over an inclined elongated device (1), driven by a vibration device (8), whereby the dosing process when reaching a predetermined value is finished by the weighing apparatus, and the pulverulent material present in the collecting container is conveyed to other materials for blending purposes, characterized in that as a pulverulent material one or more pigments are directly fed to the inclined elongated device, which is shaped as a bunker (1) and are driven from this bunker by the vibrating device (8) to the collecting container (11) through one or more outlet openings (9) at the lower end of the bunker, which bunker does not contain sharp edges in its interior and is made up of a rigid plastic resp. is coated therewith, as welll as the collecting container, to avoid particles of material from adhering to the bunker and the collecting container, and in that when reaching a predetermined weight a signal is given off by the weighing apparatus (20), which closes the ouletopening(s) (9) and empties the collecting container (11) by means of an electro-pneumatically operable device (16, 17).

2. Process according to claim 1, wherein two or more pigments are sequentially fed from the bunker consisting of separated parts to the collecting container (11).

3. Process according to claim 1 or 2, wherein the emptying of the collecting container (11) takes place sothat the pigment(s) are not contacting metallic parts or other parts of the device subsequent to the collecting container.

4. Apparatus for carrying out the process according to claims 1 to 3, characterized in that the elongated inclined device is a bunker (1) which at the lower part thereof is provided with one or more outlet openings (9), the bunker and the collecting container (11) positioned on the weighing apparatus consisting of or being coated with a rigid plastic and in that control means (13, 13a, 17) are present, which close the outlet opening(s) (9) of the bunker (1) after reaching a particular weight and overturn the collecting container (11) for emptying purposes.

5. Apparatus according to claim 4, wherein the bunker (1) consists of two separated parts each of which contains an outlet opening (9) with adjustable cross-section.

6. Apparatus according to claims 4 and 5, wherein the bunker consists of a cylinder (1) which is closed at the upper part by a corresponding cover (2).

7. Apparatus according to claims 4 to 6, wherein the bunker (1) is made up of rigid PVC or polystyrene.

8. Fully automatic mixer for preparing mixtures of concrete and brick, wherein the apparatus according to claims 4 to 7 is integrated in the control circuit of this automatic mixer sothat mixing of the pigment(s) with the other materials only then occurs when at least one of these materials is already present on a conveyor belt of the fully automatic mixer or in the collecting container (1).

## Revendications

1. Procédé pour le dosage d'une matière pulvérulente, qui est déversée via un réservoir allongé et légèrement incliné (1) entrainé par un mécanism vibreur (8) dans un récipient collecteur (11) placé sur un dispositif pesage (20), tandis que lorsque le poids de dosage est atteint, le dosage est interrompu par le dispositif de pesage et la matière pulvérulente dans le récipient collecteur est déversée dans des autres matières pour le but de malaxage, caracterisé

— en ce que comme des matières pulvérulentes un ou plusieurs de pigments sont directement déversés dans le récipient allongé et légèrement incliné, qui est formé comme un réservoir (1), et de ce réservoir via le mécanism vibreur (8) introduites par une ou plusieures ouvertures (9) d'évacuation, placées au bout inférieur du réservoir dans le récipient collecteur (11), le réservoir ne contenant pas des angles aigues dans l'intérieur et ce réservoir comme aussi le récipient collectuer étant réalisé en une matière synthétique dure resp. étant revêtu d'une matérial de telle sorte pour éliminer l'adhérence de particules de matière au réservoir et au récipient collecteur, et
— en ce que en atteignant de poids de dosage un signal est émis par le dispositif de pesage (20) pour fermer le(s) ouverture(s) d'évacuation (9) et pour évacuer le récipient collecteur(11) par un dispositif (16, 17) électro-pneumatiquement commandé.

2. Procédé suivant la révendication 1, caracterisé en ce que deux ou plusieurs pigments sont successivement déversés du réservoir (1), consistant de deux compartiments séparés, dans le récipient collecteur (11).

3. Procédé suivant les révendications 1 ou 2, caracterisé en ce que l'évacuation du récipient collecteur (11) est de telle sorte que le(s) pigment(s) n'entre(nt) pas en contact avec des éléments métalliques ou des autres parties du dispositif qui suit le dispositif collecteur.

4. Dispositif pour réaliser le procédé suivant les révendications 1 à 3, caracterisé

— en ce que le dispositif allongé incliné est un réservoir (1), contenant au bout inférieur une ou plusieures ouvertures d'évacuation (9), placé sur le dispositif de pesage étant réalisé d'une matière synthétique resp. revêtu avec cette matière, et

— en ce que des moyens de commande (13, 13a, 17) sont présents, qui ferment l'(es) ouverture(s) d'évacuation (9) du réservoir (1) après un poid déterminé est atteint et qui basculent le dispositif collecteur (11) pour le vider.

5. Dispositif suivant le révendication 4, caracterisé en ce que le réservoir (1) est subdivisé en deux compartiments ayant chacun une ouverture d'évacuation (9) règlable.

6. Dispositif suivant les révendications 4 et 5, caracterisé en ce que le réservoir est constitu d'une cylindre (1), fermé à son sommet par une couvercle ajustée (2).

7. Dispositif suivant les révendications 4 à 6, caracterisé en ce que le réservoir (1) est réalisé en PVC dur ou polystyrène.

8. Malaxeur entièrement automatique pour fabriquer des mélanges de béton et de pierres, caracterisé en ce que le dispositif suivant les révendications 4 à 7 est intégré dans les chaînes de commande électroniques de ce malaxeur de telle sorte que le mélange du pigment ou des pigments avec les autres composants n'ait lieu que lorsque'au moins un composant est déjà déversé sur la bande transporteuse du malaxeur entièrement automatique ou dans le dispositif collecteur (11).

FIG.1

FIG. 2